# EUROPEAN PATENT APPLICATION

(11) **EP 4 086 985 A1**
(43) Date of publication of application: **09.11.2022**
(21) Application number: 21867892.8
(22) Date of filing: 17.03.2021
(51) Int. Cl.: H01M 4/66, H01M 10/0525

(54) **MAGNETIC CURRENT COLLECTOR, AND NEGATIVE ELECTRODE PLATE, LITHIUM METAL BATTERY AND ELECTRONIC DEVICE USING SAME**

(30) Priority: 09.04.2020 CN 202010273834
(71) Applicant: Ningde Amperex Technology Limited, Zhangwan Town, Jiaocheng District Ningde City Fujian 352100 (CN)
(72) Inventor: GUAN, Wenhao, Ningde Fujian 352100 (CN); CHEN, Maohua, Ningde Fujian 352100 (CN); XIE, Yuansen, Ningde Fujian 352100 (CN)
(74) Representative: Klunker IP Patentanwälte PartG mbB
(86) International application number: PCT/CN2021/081268
(87) International publication number: WO 2022/193168

(57) **Abstract**

A magnetic current collector and a negative electrode plate that applies same, a lithium metal battery, and an electronic device are disclosed. The magnetic current collector includes a permanent magnet material layer. In the permanent magnet material layer, remanence intensity of a permanent magnet material is 0 T to 2 T. The magnetic current collector provided in this application can introduce a magnetic field into the lithium metal battery. The magnetic field interacts electromagnetically with an electric field exerted by the battery to quicken a mass transfer process of lithium ions at an interface between a negative electrode and an electrolytic solution, homogenize a current density generated by a lithium-ion flow on a surface of the negative electrode, quicken a mass transfer process of lithium ions in a direction parallel to the current collector, and homogenize the distribution of lithium ions, so as to suppress lithium dendrites and improve the cycle performance of the lithium metal battery.

## Description

### TECHNICAL FIELD

This application relates to the technical field of lithium metal batteries, and in particular, to a magnetic current collector and a negative electrode plate that applies same, a lithium metal battery, and an electronic device.

### BACKGROUND

Among all metal elements, lithium metal is a metal with the smallest relative atomic mass (6.94) and the lowest standard electrode potential (-3.045 V). A theoretical gram capacity of the lithium metal is up to 3860 mAh/g. Therefore, by using the lithium metal as a negative electrode of the battery accompanied by some positive electrode materials of a high energy density, the energy density of the battery and the working voltage of the battery can be greatly increased. However, if the battery that uses the lithium metal as a negative electrode material is put into real commercial use, the cycle life and the safety issue need to be improved in the following three aspects. (1) At an interface between a lithium metal negative electrode and an electrolytic solution, an exerted electric field interacts with a lithium-ion flow to form uneven liquid electro-convection perpendicular to a surface of the negative electrode. Consequently, a mass transfer speed of lithium ions in a direction perpendicular to the current collector is faster than a mass transfer speed in a direction parallel to the current collector, thereby being an important factor for forming a lithium dendrite structure. (2) During the charging of the lithium metal battery, lithium is deposited on a surface of the negative current collector. Due to a weak lithiophilic nature of the current collector, lithium ions are unable to be homogeneously and rapidly nucleated, resulting in inhomogeneous lithium ion concentration at an interface between a negative electrode and an electrolytic solution. Consequently, current density distribution at the interface is inhomogeneous, deposition speed at a nucleation site is too fast, and a dendrite structure is formed, thereby severely limiting efficiency, cycle life, and energy density of the lithium metal battery. (3) In a liquid-state electrolyte system, consumption speed of the lithium ions is far less than the mass transfer speed in the electrolytic solution. Consequently, the lithium ions are piled up on the dendrite surface to form a huge space charge layer and a huge deposition barrier, thereby hindering the deposition of the lithium ions at a root of the dendrite and making the lithium dendrite sharper. The sharp lithium dendrite may pierce a separator and directly contact a positive electrode to form a short circuit to cause serious safety problems.

In view of the foregoing problems, it is urgent to find a method that can homogenize the current density distribution at the interface between the negative electrode and the electrolytic solution, homogenize the lithium ion concentration on the surface of the negative electrode, and suppress the generation of the space charge layer on the surface of the deposited lithium, so as to suppress the growth of the lithium dendrite and improve cycle performance of the lithium metal battery.

### SUMMARY

An objective of this application is to provide magnetic current collector and a negative electrode plate that applies same, a lithium metal battery, and an electronic device to improve cycle performance of the lithium metal battery.

A first aspect of this application provides a magnetic current collector, including a permanent magnet material layer. In the permanent magnet material layer, remanence intensity of a permanent magnet material is 0 T to 2 T. Preferably, the remanence intensity of the permanent magnet material is 0.5 T to 1.6 T.

During research, the inventor unexpectedly discovers that the lithium metal battery prepared by using the magnetic current collector according to this application achieves higher cycle performance, and seldom generates sharp lithium dendrites on the surface of the negative electrode, thereby improving battery life and safety. Without being limited by any theory, the inventor considers that the magnetic current collector can introduce a magnetic field into the lithium metal battery. The magnetic field interacts electromagnetically with an electric field exerted by the battery to quicken a mass transfer process of lithium ions at an interface between a negative electrode and an electrolytic solution, homogenize a current density generated by a lithium-ion flow on a surface of the negative electrode, and enable lithium ions to nucleate in a wider range. The magnetic current collector can quicken a mass transfer process of the lithium ions in a direction parallel to the current collector, and homogenize the distribution of the lithium ions, so as to induce lithium dendrites to grow in the direction parallel to the current collector, reduce sharp lithium dendrites generated, and improve the cycle performance, safety performance, and service life of the lithium metal battery.

This application does not limit the direction of the magnetic field in the permanent magnet material layer, as long as the objectives of this application can be achieved. For example, the direction of the magnetic field may be perpendicular to the surface of the current collector or parallel to the surface of the current collector. Without being limited to any theory, the inventor considers that if the direction of the magnetic field is parallel to the direction of the electric field, that is, the direction of the magnetic field is perpendicular to the surface of the magnetic current collector, a microscopic magnetic fluid convection loop will be formed on the surface of the negative electrode to facilitate the mass transfer process of the lithium ions in the direction parallel to the current collector. The lithium-ion concentration is distributed more homogeneously, and the current density generated by the movement of the lithium-ion flow is distributed more homogeneously. This is conducive to the nucleation and deposition of ions in a wider range, and suppresses the formation of lithium dendrites. If the magnetic field generated by the current collector is perpendicular to the direction of the exerted electric field, that is, the direction of the magnetic field is parallel to the surface of the magnetic current collector, electromagnetic interaction gives rise to a Lorenz force parallel to the direction of the current collector. This force facilitates the mass transfer of the lithium ions in the direction parallel to the current collector, and induces a growth direction of the deposited lithium to be parallel to the current collector, thereby being conducive to planar deposition of lithium and suppressing the formation of lithium dendrites. If the magnetic field generated by the magnetic current collector is neither parallel nor perpendicular to the direction of the exerted electric field, decomposition of magnetic induction lines shows that both of the foregoing two electromagnetic induction effects exist, thereby improving deposition morphology and suppressing the formation of lithium dendrites as well.

The "remanence intensity" in this application means intensity of a magnetic field retained after an external magnetic field is removed in a case that the external magnetic field is exerted on the permanent magnet material in this application to perform magnetization. The remanence intensity depends on inherent properties of the permanent magnet material and the intensity of the external magnetic field.

The "permanent magnet material" in this application is understood as a general meaning thereof, and is also known as "a hard magnet material", that is, a material that can maintain constant magnetism once magnetized.

In some embodiments of the first aspect of this application, the magnetic current collector includes the permanent magnet material layer. The thickness of the permanent magnet material layer is 1 µm to 100 µm. This can be understood as: the permanent magnet material layer in this application can be directly used as the magnetic current collector. The inventor finds that, when the permanent magnet material layer in this application is directly used as a current collector, if the thickness of the permanent magnet material layer is too small, the current collector is prone to demagnetize and is prone to be damaged due to too low strength. However, if the thickness is too large, the energy density of the battery is significantly reduced. Therefore, in some embodiments of the first aspect of this application, when the permanent magnet material layer of this application is directly used as a current collector, the thickness of the magnetic current collector is 1 µm to 100 µm.

In other embodiments of the first aspect of this application, the permanent magnet material layer exists on at least one surface of the metallic current collector. This can be understood as: the magnetic current collector includes a metallic current collector and a permanent magnet material layer disposed on at least one surface of the metallic current collector.

In this application, the type of the metallic current collector is not limited as long as the objectives of this application can be achieved. For example, a negative current collector well known in the art, such as a copper foil, an aluminum foil, an aluminum alloy foil, or a composite current collector, may be used.

In this application, the thickness of the metallic current collector is not limited as long as the objectives of this application can be achieved. For example, the thickness may be 1 µm to 100 µm.

During research, the inventor finds that a demagnetization factor of the permanent magnet material layer in a plane normal direction is positively correlated with the thickness of the permanent magnet material layer. That is, the smaller the thickness, the more prone the permanent magnet material layer is to demagnetize. Conversely, when the thickness of the permanent magnet material layer is too large, the energy density of the battery is reduced. Therefore, in some embodiments of the first aspect of this application, when the permanent magnet material layer exists on at least one surface of the metallic current collector, the thickness of the permanent magnet material layer is 0.1 µm to 10 µm.

In this application, the type of the permanent magnet material is not limited as long as the objectives of this application can be achieved. For example, the permanent magnet material may include at least one of a rare earth permanent magnet material, a metallic permanent magnet material, or a ferrite permanent magnet material. Specifically, the rare earth permanent magnet material includes but is not limited to at least one of SₘCo₅, Sm₂Co₁₇, Nd-Fe-B, Pr-Fe-B, or Sm-Fe-N. This application does not limit the specific composition or the preparation method of the Nd-Fe-B, Pr-Fe-B, and Sm-Fe-N permanent magnet materials as long as the objectives of the present invention can be achieved. For example, using an Nd-Fe-B permanent magnet material as an example, the molecular formula of the material is NdₓM_{y}Fe_{100-xy-z}B_{z}, where x, y, and z represent a stoichiometric ratio (number of moles) of each corresponding element, and 20 ≤ x ≤ 50, 0 ≤ y ≤ 10, 0.8 ≤ z ≤ 1, and M is one or more of La, Ce, Pr, Dy, Ga, Co, Cu, Al, or Nb element. The Nd-Fe-B permanent magnet material may be prepared by the following method: formulating metallic ingredients based on the molecular formula, and mixing and smelting the metallic ingredients, and then jet-milling the ingredients to obtain a powdery Nd-Fe-B permanent magnet material; and subjecting magnetic powder to magnetic field orientation, and pressing the magnetic powder into a roughcast magnet, and then placing the roughcast magnet into a vacuum sintering furnace for sintering. The sintering process is: increasing the temperature to 200 °C - 400 °C at a speed of 5 °C - 10 °C per minute and keeping the temperature for 1 hour to 2 hours, increasing the temperature to 500 °C - 700 °C and keeping the temperature for 1 hour to 5 hours, then increasing the temperature to 750 °C - 850 °C and keeping the temperature for 1 hour to 5 hours, finally increasing the temperature to 900 °C - 1100 °C and sintering for 2 hours to 6 hours, and filling the furnace with argon to quickly cool down to a room temperature to obtain an Nd-Fe-B permanent magnet material sheet.

The metallic permanent magnet material includes but is not limited to at least one of Al-Ni-Co, Fe-Cr-Co, Cu-Ni-Fe, or Fe-Co-V In this application, the specific composition and preparation method of the Al-Ni-Co, Fe-Cr-Co, Cu-Ni-Fe, and Fe-Co-V permanent magnet materials are not limited as long as the objectives of this application can be achieved. Using an Al-Ni-Co permanent magnet material as an example, the molecular formula of the material is AlₓNi_{y}Co_{z}Fe_{100-x-y-z}, where x, y, and z represent a stoichiometric ratio (number of moles) of each corresponding element, and 5 ≤ x ≤ 20, 10 ≤ y ≤ 20, 40 ≤ z ≤ 60. The Al-Ni-Co permanent magnet material may be prepared by the following method: formulating metallic ingredients based on the molecular formula, mixing and smelting the ingredients, and jet-milling the ingredients to obtain a powdery Al-Ni-Co permanent magnet material; and subjecting magnetic powder to magnetic field orientation, and pressing the magnetic powder into a roughcast magnet, and then placing the roughcast magnet into a vacuum sintering furnace for sintering. The sintering process is: increasing the temperature to 300 °C-400 °C at a speed of 5 °C-10 °C per minute and keeping the temperature for 1 hour to 3 hours, increasing the temperature to 500 °C-700 °C and keeping the temperature for 1 hour to 5 hours, then increasing the temperature to 750 °C-850 °C and keeping the temperature for 1 hour to 5 hours, finally increasing the temperature to 900 °C-1200 °C and sintering for 2 hours to 6 hours, and filling the furnace with argon to quickly cool down to a room temperature to obtain an Al-Ni-Co permanent magnet material sheet.

The ferrite-based permanent magnet material includes, but is not limited to, a permanent magnet material formed by sintering Fe₂O₃ with at least one of nickel oxide, zinc oxide, manganese oxide, barium oxide, or strontium oxide.

In some embodiments of the first aspect of this application, a resistivity of the permanent magnet material is less than or equal to 200 Ω·m. The inventor finds that, if the resistivity of the permanent magnet material is too high, functions of the current collector in collecting and outputting a current are affected, and the performance of the battery is reduced.

In some embodiments of the first aspect of this application, the permanent magnet material layer further includes a conductive material. A mass percent of the conductive material is less than 50%.

In this application, the type of the conductive material is not limited as long as the objectives of this application can be achieved. For example, the conductive material may include at least one of acetylene black, superconducting carbon, or Ketjen black.

This application does not limit the manufacturing process of the magnetic current collector as long as the objectives of this application can be achieved. For example, when the permanent magnet material layer is directly used as a magnetic current collector, permanent magnet material sheets may be selected, cut, and magnetized to obtain the magnetic current collector in this application; when the magnetic current collector includes a metallic current collector and a permanent magnet material layer, permanent magnet material particles may be sputtered on the surface of the metallic current collector by using a magnetron sputtering technology. The metallic current collector is cut and magnetized to obtain a magnetic current collector that includes the metallic current collector and the permanent magnet material layer.

A second aspect of this application provides a negative electrode plate. The negative electrode plate includes the magnetic current collector according to the first aspect of this application.

The negative electrode plate in this application may include a negative active material layer or not. This can be understood that, when the negative electrode plate does not include the negative active material layer, the magnetic current collector in this application is directly used as the negative electrode plate.

In some embodiments of the second aspect of this application, when a negative active material layer exists on a surface of the magnetic current collector, the negative active material layer includes lithium. For example, the negative active material layer may include metallic lithium or an alloy material containing metallic lithium. In some embodiments of the second aspect of this application, the thickness of the negative active material layer is 5 µm to 200 µm.

In some embodiments of the second aspect of this application, a conductive layer is disposed between the magnetic current collector and the negative active material layer. The inventor finds that the conductive layer disposed between the magnetic current collector and the negative active material layer helps to improve conductivity of the negative electrode plate and improve the cycle performance of the battery.

In this application, the material of the conductive layer is not limited as long as the objectives of this application can be achieved. For example, the conductive layer may include at least one of Cu, Ni, Ti, Ag, or a carbon conductive agent. Specifically, the carbon conductive agent may be at least one selected from acetylene black, superconducting carbon, or Ketjen black.

A third aspect of this application provides a lithium metal battery. The lithium metal battery includes the negative electrode plate according to the second aspect of this application.

The negative electrode plate in the lithium metal battery according to this application is the negative electrode plate according to this application. Other components such as a positive electrode plate, a separator, and an electrolytic solution are not particularly limited as long as the objectives of this application can be achieved.

For example, a positive electrode generally includes a positive current collector and a positive active material layer. The positive current collector is not particularly limited, and may be a positive current collector well known in the art. For example, the positive current collector may be a copper foil, an aluminum foil, an aluminum alloy foil, or a composite current collector. The positive active material layer includes a positive active material. The positive active material is not particularly limited, and may be a positive active material well known in the prior art. For example, the positive active material includes at least one of lithium nickel cobalt manganese oxide (811, 622, 523, 111), lithium nickel cobalt aluminum oxide, lithium iron phosphate, a lithium-rich manganese-based material, lithium cobaltate, lithium manganate, lithium manganese iron phosphate, or lithium titanate. In this application, the thicknesses of the positive current collector and the positive active material layer are not particularly limited, as long as the objectives of this application can be achieved. For example, the thickness of the positive current collector is 8 µm to 12 µm, and the thickness of the positive active material layer is 30 µm to 120 µm.

Optionally, the positive electrode may further include a conductive layer. The conductive layer is located between the positive current collector and the positive active material layer. The composition of the conductive layer is not particularly limited, and may be a conductive layer commonly used in the art. The conductive layer includes a conductive agent and a binder.

The conductive agent is not particularly limited, and may be any conductive agents known to a person skilled in the art or a combination thereof. For example, the conductive agent may be at least one of a zero-dimensional conductive agent, a one-dimensional conductive agent, or a two-dimensional conductive agent. Preferably, the conductive agent may include at least one of carbon black, conductive graphite, carbon fiber, carbon nanotube, VGCF (vapor grown carbon fiber), or graphene. The dosage of the conductive agent is not particularly limited, and may be determined based on common knowledge in the art. One of the foregoing conductive agents may be used alone, or two or more of the conductive agents may be used together at any ratio.

The binder is not particularly limited, and may be any binder or any combination of binders known in the art. For example, the binder may be at least one of polyacrylate, polyimide, polyamide, polyamide imide, polyvinylidene difluoride, styrene butadiene rubber, sodium alginate, polyvinyl alcohol, polytetrafluoroethylene, polyacrylonitrile, sodium carboxymethyl cellulose, potassium carboxymethyl cellulose, sodium hydroxypropyl cellulose, potassium hydroxypropyl cellulose, or the like. One of the binders may be used alone, or two or more of the binders may be used together at any ratio.

The lithium metal battery in this application further includes a separator configured to separate the positive electrode from the negative electrode, prevent an internal short circuit of the lithium metal battery, allow free passage of electrolyte ions, and complete electrochemical charging and discharging processes. In this application, the separator is not particularly limited as long as the objectives of this application can be achieved.

For example, the separator may be at least one of: a polyethylene (PE)- or polypropylene (PP)-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, or a spinning film.

For example, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, a surface treatment layer is disposed on at least one surface of the substrate layer. The surface treatment layer may be a polymer layer or an inorganic compound layer, or a layer formed by mixing a polymer and an inorganic compound.

For example, the inorganic compound layer includes inorganic particles and a binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and may be one or more selected from polyvinylidene fluoride, vinylidene fluoride-hexafluoropropylene copolymer, polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer includes at least one of polyamide, polyacrylonitrile, acrylate polymer, polyacrylic acid, polyacrylate, polyvinylpyrrolidone, polyvinyl ether, polyvinylidene fluoride, poly(vinylidene fluoride-hexafluoropropylene), or the like.

The lithium metal battery according to this application further includes an electrolyte. The electrolyte may be one or more of a gel electrolyte, a solid-state electrolyte, and an electrolytic solution. The electrolytic solution includes a lithium salt and a nonaqueous solvent.

In some embodiments of the first aspect of this application, the lithium salt is one or more selected from LiTFSI, LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, the lithium salt may be LiTFSI because it provides a high ionic conductivity and improves cycle characteristics.

The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are dimethyl carbonate (DMC), diethyl carbonate (DEC), dipropyl carbonate (DPC), methyl propyl carbonate (MPC), ethylene propyl carbonate (EPC), ethyl methyl carbonate (EMC), or any combinations thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1, 2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combinations thereof.

Examples of the carboxylate compound are methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, or any combinations thereof.

Examples of the ether compound are dimethyl ether, dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, and any combination thereof.

The preparation process of the lithium metal battery is well known to a person skilled in the art, and is not particularly limited in this application. For example, the manufacturing process may be: properly stacking the positive electrode and the negative electrode that are separated by the separator, and then fixing four corners of the entire laminate structure by using adhesive tape, and then placing the laminate structure into an aluminum plastic film; and performing top-and-side sealing, electrolyte injection, and sealing to ultimately obtain a laminated lithium metal battery. The negative electrode in use is the negative electrode plate according to this application.

A fourth aspect of this application provides an electronic device. The electronic device includes the lithium metal battery according to the third aspect of this application.

The electronic device according to this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

The magnetic current collector provided in this application can introduce a magnetic field into the lithium metal battery. The magnetic field interacts electromagnetically with an electric field exerted by the battery to quicken a mass transfer process of lithium ions at an interface between a negative electrode and an electrolytic solution, homogenize a current density generated by a lithium-ion flow on a surface of the negative electrode, quicken a mass transfer process of lithium ions in a direction parallel to the current collector, and homogenize the distribution of lithium ions, so as to suppress lithium dendrites and improve the cycle performance of the lithium metal battery.

### DETAILED DESCRIPTION OF EMBODIMENTS

To make the objectives, technical solutions, and advantages of this application clearer, the following describes this application in more detail with reference to embodiments. Evidently, the described embodiments are merely a part of but not all of the embodiments of this application. All other embodiments derived by a person of ordinary skill in the art based on the embodiments of this application fall within the protection scope of this application.

A permanent magnet material is magnetized by a using magnetizer (brand: Jiuju; model: MA2030) with a planar multi-stage magnetizing coil.

Remanence intensity of the permanent magnet material is measured by using a Tianheng TD8650 Teslameter-Gaussmeter.

The measurement procedure is as follows:
1. Turning on the instrument. The display screen shows +000. If the display screen shows another value, pressing the reset button until the displayed value is zero.
2. Selecting a test range based on an estimated remanence intensity.
3. Placing a measuring side of a Hall probe of the instrument toward the measured permanent magnet vertically, so that a recessed dot on a sensor head indicates the measuring side of the probe. At this time, magnetic field lines of the measured permanent magnet pass through the Hall probe vertically.
4. Reading the reading on the display screen of the instrument to obtain the remanence intensity of the permanent magnet.

### Testing a capacity retention rate:

Charging a lithium metal battery at a constant current of 0.5 C until the voltage reaches 4.4 V, then charging the battery at a constant voltage of 4.4 V until the current reaches 0.05 C, leaving the battery to stand for 10 minutes in a 25 °C±3 °C environment, and then discharging the battery at a current of 0.5 C until the voltage reaches 3.0 V, and recording a first-cycle discharge capacity as Q₁. Repeating the foregoing charge and discharge process for 100 cycles, and recording the discharge capacity as Q₁₀₀, and obtaining a 100^{th}-cycle capacity retention rate η based on the following formula: η = Q₁₀₀/Q₁ × 100%.

### Preparation Example 1: Preparing a positive electrode plate

Mixing lithium iron phosphate (LiFePO₄) as a positive active materials, conductive carbon black (Super P), and polyvinylidene difluoride (PVDF) at a mass ratio of 97.5: 1.0: 1.5, adding N-methyl-pyrrolidone (NMP) as a solvent, blending the mixture into a slurry with a solid content of 0.75, and stirring the slurry evenly. Coating a 10 µm-thick positive current collector aluminum foil with the slurry evenly, drying the slurry at a temperature of 90 °C, and forming a 100 µm-thick positive active material layer on one side of the positive current collector, so as to obtain a positive electrode plate coated with the positive active material layer on a single side. After completion of the coating, cutting the electrode plate into a size of 38 mm × 58 mm for future use.

### Preparation Example 2: Preparing an electrolytic solution

Mixing dioxolane (DOL) and dimethyl ether (DME) as a solvent at a volume ratio of 1:1 in a dry argon atmosphere, and then adding a lithium salt LiTFSI into the solvent, letting the lithium salt be dissolved and mixed evenly to obtain an electrolytic solution in which a lithium salt concentration is 1 mol/L.

### Preparation Example 3: Preparing a lithium metal battery

Using a 15 µm-thick polyethylene (PE) as a separator, placing the negative electrode plate prepared in each embodiment and comparative embodiment in the middle, placing one single-side-coated positive electrode plate as an upper layer and another as a lower layer, and placing a separator between each positive electrode plate and the negative electrode plate. After lamination, fixing four corners of the entire laminate structure by using adhesive tape, and then placing the laminate structure into an aluminum plastic film; and performing top-and-side sealing, electrolyte injection, and sealing to ultimately obtain a laminated lithium metal battery.

### Preparing a negative electrode plate

### Embodiment 1

Preparing Nd-Fe-B sheets: Formulating metallic ingredients of Nd, Fe, and B at a molar ratio of 20: 79: 1, mixing and smelting the ingredients, and jet-milling the ingredients to obtain Nd-Fe-B alloy magnetic powder. Subjecting the magnetic powder to magnetic field orientation, and pressing the magnetic powder into a roughcast magnet, and then placing the roughcast magnet into a vacuum sintering furnace for sintering. The sintering process is: increasing the temperature to 400 °C at a speed of 10 °C per minute and keeping the temperature for 2 hours, increasing the temperature to 700 °C and keeping the temperature for 5 hours, then increasing the temperature to 850 °C and keeping the temperature for 1 hour, finally increasing the temperature to 1100 °C and sintering for 6 hours, and filling the furnace with argon to quickly cool down to a room temperature to obtain an Nd-Fe-B sheet.

Cutting the Nd-Fe-B sheet into a size of 50 □m in thickness, 40 mm in width, 60 mm in length, and then performing unsaturated magnetization at a magnetization intensity of 1 T (based on a criterion set to be less than 95% of the remanence intensity or intrinsic coercivity) by using an automated magnetizer, where a magnetization direction is parallel to a normal direction of the sheet, that is, the direction of the generated magnetic induction line is parallel to the direction of the exerted electric field; and measuring the remanence intensity to be 0.85 T. Using the magnetized Nd-Fe-B sheet as the negative electrode plate directly.

### Embodiment 2

Performing magnetization at a magnetization intensity of 5 T (based on a criterion set to be higher than 2 to 4 times the remanence intensity or intrinsic coercivity), and measuring the remanence intensity to be 1.45 T. The remainder is the same as Embodiment 1.

### Embodiment 3

Performing magnetization at a magnetization intensity of 8 T, and measuring the remanence intensity to be 1.50 T. The remainder is the same as Embodiment 1.

### Embodiment 4

Performing magnetization at a magnetization intensity of 1 T, where the magnetization direction is perpendicular to the normal direction of the sheet, that is, the direction of the generated magnetic induction line is perpendicular to the direction of the exerted electric field; and measuring the remanence intensity to be 0.65 T. The remainder is same as Embodiment 1.

### Embodiment 5

Performing magnetization at a magnetization intensity of 5 T, and measuring the remanence intensity to be 1.30 T. The remainder is the same as Embodiment 4.

### Embodiment 6

Performing magnetization at a magnetization intensity of 8 T, and measuring the remanence intensity to be 1.38 T. The remainder is the same as Embodiment 4.

### Embodiment 7

Preparing Al-Ni-Co sheets: Formulating metallic ingredients of Al, Ni, Co, and Fe at a molar ratio of 5: 10: 40: 45, mixing and smelting the ingredients, and jet-milling the ingredients to obtain Al-Ni-Co alloy magnetic powder. Subjecting the magnetic powder to magnetic field orientation, and pressing the magnetic powder into a roughcast magnet, and then placing the roughcast magnet into a vacuum sintering furnace for sintering. The sintering process is: increasing the temperature to 300 °C at a speed of 5 °C per minute and keeping the temperature for 1 hours, increasing the temperature to 700 °C and keeping the temperature for 1 hours, then increasing the temperature to 750 °C and keeping the temperature for 1 hour, finally increasing the temperature to 1200 °C and sintering for 2 hours, and filling the furnace with argon to quickly cool down to a room temperature to obtain an Al-Ni-Co sheet.

Cutting the Al-Ni-Co sheet into a size of 10 µm in thickness, 40 mm in width, and 60 mm in length. Performing magnetization at a magnetization intensity of 5 T by using an automated magnetizer, where the magnetization direction is parallel to the normal direction of the sheet, that is, the direction of the generated magnetic induction line is parallel to the direction of the exerted electric field; and measuring the remanence intensity to be 1.35 T. Using the magnetized Al- Ni-Co sheet as a negative electrode plate directly.

### Embodiment 8

Magnetizing a 50 µm-thick Al-Ni-Co sheet at a magnetization intensity of 5 T, and measuring the remanence intensity to be 1.33 T. The remainder is the same as Embodiment 7.

### Embodiment 9

Magnetizing a 100 µm-thick Al-Ni-Co sheet at a magnetization intensity of 5 T, and measuring the remanence intensity to be 1.28 T. The remainder is the same as Embodiment 7.

### Embodiment 10

Cutting a 10 µm-thick Al-Ni-Co sheet into a size of 40 mm × 60 mm. Then performing magnetization at a magnetization intensity of 5 T, where the magnetization direction is perpendicular to the normal direction of the sheet, that is, the direction of the generated magnetic induction line is perpendicular to the direction of the exerted electric field; and measuring the remanence intensity to be 1.35 T. Using the Al- Ni-Co sheet as a negative electrode plate directly.

### Embodiment 11

Magnetizing a 50 µm-thick Al-Ni-Co sheet at a magnetization intensity of 5 T, and measuring the remanence intensity to be 1.26 T. The remainder is the same as Embodiment 10.

### Embodiment 12

Magnetizing a 100 µm-thick Al-Ni-Co sheet at a magnetization intensity of 5 T, and measuring the remanence intensity to be 1.06 T. The remainder is the same as Embodiment 10.

### Embodiment 13

Sputtering an Sm₂Co₁₇ material layer on both surfaces of an 8 µm-thick copper foil by using a magnetron sputtering technology (with an MSP-300B magnetron sputtering machine manufactured by Beijing Chuangshiweina), where the thickness of the Sm₂Co₁₇ material layer sputtered on both surfaces is 1 µm; and cutting the copper foil into a size of 40 mm × 60 mm. Then performing magnetization at a magnetization intensity of 1 T, where the magnetization direction is perpendicular to the normal direction of the current collector; and measuring the remanence intensity to be 0.81 T.

### Embodiment 14

Performing magnetization at a magnetization intensity of 5 T, and measuring the remanence intensity to be 1.02 T. The remainder is the same as Embodiment 13.

### Embodiment 15

Performing magnetization at a magnetization intensity of 8 T, and measuring the remanence intensity to be 1.15 T. The remainder is the same as Embodiment 13.

### Embodiment 16

Sputtering a BaFe₁₂O₁₉ material layer on both surfaces of an 8 µm-thick copper foil by using a magnetron sputtering technology, where the thickness of the BaFe₁₂O₁₉ material layer sputtered on both surfaces is 0.1 µm; and cutting the copper foil into a size of 40 mm × 60 mm. Then performing magnetization at a magnetization intensity of 5 T, where the magnetization direction is perpendicular to the normal direction of the current collector; and measuring the remanence intensity to be 0.42 T.

### Embodiment 17

This embodiment is the same as Embodiment 16 except that the thickness of the BaFe₁₂O₁₉ material layer sputtered on both surfaces of the copper foil is 1 µm. The measured remanence intensity is 0.38 T.

### Embodiment 18

This embodiment is the same as Embodiment 16 except that the thickness of the BaFe₁₂O₁₉ material layer sputtered on both surfaces of the copper foil is 10 µm. The measured remanence intensity is 0.24 T.

### Embodiment 19

Sputtering, by using a magnetron sputtering technology, both surfaces of an 8 µm-thick copper foil with the Nd-Fe-B alloy magnetic powder obtained in Embodiment 1, so as to form an Nd-Fe-B material layer, where the thickness of the Nd-Fe-B material layer sputtered on both surfaces is 0.1 µm; and cutting the copper foil into a size of 40 mm × 60 mm. Then performing magnetization at a magnetization intensity of 5 T, where the magnetization direction is perpendicular to the normal direction of the current collector; and measuring the remanence intensity to be 1.45 T.

### Embodiment 20

Sputtering, by using a magnetron sputtering technology, both surfaces of an 8 µm-thick copper foil with the Al-Ni-Co alloy magnetic powder obtained in Embodiment 7, so as to form an Al-Ni-Co material layer, where the thickness of the Al-Ni-Co material layer sputtered on both surfaces is 0.1 µm; and cutting the copper foil into a size of 40 mm × 60 mm. Then performing magnetization at a magnetization intensity of 5 T, where the magnetization direction is perpendicular to the normal direction of the current collector; and measuring the remanence intensity to be 1.45 T.

### Embodiment 21

Performing cold calendering and lithium replenishment on the surface of the magnetic current collector (that is, the magnetized Al-Ni-Co sheet) prepared in Embodiment 7, where the pressure is 0.2 ton to 0.8 ton and the thickness of the lithium active layer is 10 µm to 100 µm.

### Embodiment 22

Performing cold calendering and lithium replenishment on the surface of the magnetic current collector (that is, the copper foil sputtered with magnetized BaFe₁₂O₁₉ on both surfaces) prepared in Embodiment 16, where the pressure is 0.2 ton to 0.8 ton and the thickness of the lithium active layer is 10 µm to 100 µm.

### Comparative Embodiment 1

Using a 10 µm-thick copper foil as a negative electrode plate directly.

### Comparative Embodiment 2

Performing cold calendering and lithium replenishment on the surface of the 10 µm-thick copper foil, where the pressure is 0.2 ton to 0.8 ton and the thickness of the lithium active layer is 10 µm to 100 µm.

Table 1 shows performance parameters of a lithium metal battery assembled with the negative electrode plate prepared in each embodiment and comparative embodiment.

**Table 1**

| | Current collector material | Remanence intensity (T) | Thickness of permanent magnet material layer (µm) | Thickness of current collector (µm) | Magnetic field direction | 100^{th}-cycle capacity retention rate (%) |
|---|---|---|---|---|---|---|
| Embodiment 1 | Nd-Fe-B | 0.85 | 50 | 50 | Parallel | 60 |
| Embodiment 2 | Nd-Fe-B | 1.45 | 50 | 50 | Parallel | 75 |
| Embodiment 3 | Nd-Fe-B | 1.50 | 50 | 50 | Parallel | 76 |
| Embodiment 4 | Nd-Fe-B | 0.65 | 50 | 50 | Perpendicular | 58 |
| Embodiment 5 | Nd-Fe-B | 1.30 | 50 | 50 | Perpendicular | 75 |
| Embodiment 6 | Nd-Fe-B | 1.38 | 50 | 50 | Perpendicular | 78 |
| Embodiment 7 | Al-Ni-Co | 1.35 | 10 | 10 | Parallel | 78 |
| Embodiment 8 | Al-Ni-Co | 1.33 | 50 | 50 | Parallel | 70 |
| Embodiment 9 | Al-Ni-Co | 1.28 | 100 | 100 | Parallel | 65 |
| Embodiment 10 | Al-Ni-Co | 1.35 | 10 | 10 | Perpendicular | 76 |
| Embodiment 11 | Al-Ni-Co | 1.26 | 50 | 50 | Perpendicular | 68 |
| Embodiment 12 | Al-Ni-Co | 1.06 | 100 | 100 | Perpendicular | 60 |
| Embodiment 13 | Sm₂Co₁₇ | 0.81 | 1 | 10 | Perpendicular | 52 |
| Embodiment 14 | Sm₂CO₁₇ | 1.02 | 1 | 10 | Perpendicular | 65 |
| Embodiment 15 | Sm₂Co₁₇ | 1.15 | 1 | 10 | Perpendicular | 68 |
| Embodiment 16 | BaFe₁₂O₁₉ | 0.42 | 0.1 | 8.2 | Perpendicular | 51 |
| Embodiment 17 | BaFe₁₂O₁₉ | 0.38 | 1 | 10 | Perpendicular | 45 |
| Embodiment 18 | BaFe₁₂O₁₉ | 0.24 | 10 | 28 | Perpendicular | 40 |
| Embodiment 19 | Nd-Fe-B | 1.45 | 0.1 | 8.2 | Perpendicular | 74 |
| Embodiment 20 | Al-Ni-Co | 1.28 | 0.1 | 8.2 | Perpendicular | 70 |
| Embodiment | Al-Ni-Co | 1.35 | 10 | 10 | Parallel | 82 |
| 21 | | | | | | |
| Embodiment 22 | BaFe₁₂O₁₉ | 0.42 | 0.1 | 8.2 | Perpendicular | 75 |
| Comparative Embodiment 1 | Cu | / | / | 10 | / | 36 |
| Comparative Embodiment 2 | Cu | / | / | 10 | / | 50 |

As can be seen from the comparison between Embodiments 1-22 and Comparative Embodiments 1-2, when the magnetic current collector according to this application is adopted, the cycle performance (100^{th}-cycle capacity retention rate) of the battery is significantly improved. As can be seen from Embodiments 1-6 and Embodiments 13-15, the higher the remanence intensity of the permanent magnet material, the higher the cycle performance of the battery. For different magnetic materials, the same rule is exhibited.

As can be seen from Embodiments 1-6 and Embodiments 7-12, this application can be implemented regardless of the magnetization direction.

As can be seen from Embodiments 7-12 and Embodiments 16-18, with the same magnetization intensity, the increase in the thickness of the permanent magnet material layer slightly reduces the remanence intensity. The inventor also finds that the thickness of the permanent magnet material layer scarcely affects the capacity retention rate of the battery. Considering the energy density of the battery as well as the impact caused by the intensity of the permanent magnet material layer and a demagnetization factor, when the permanent magnet material layer according to this application is directly used as a current collector, the thickness of the magnetic current collector is 1 µm to 100 µm. When the permanent magnet material layer exists on at least one surface of the metallic current collector, the thickness of the permanent magnet material layer is 0.1 µm to 10 µm.

The foregoing descriptions are merely exemplary embodiments of this application, but are not intended to limit this application. Any modifications, equivalent substitutions, and improvements made within the spirit and principles of this application fall within the protection scope of this application.

## Claims

1. A magnetic current collector, comprising a permanent magnet material layer, wherein, in the permanent magnet material layer, remanence intensity of a permanent magnet material is 0 T to 2 T.

2. The magnetic current collector according to claim 1, wherein the magnetic current collector comprises the permanent magnet material layer, and a thickness of the permanent magnet material layer is 1 µm to 100 µm.

3. The magnetic current collector according to claim 1, wherein the permanent magnet material layer exists on at least one surface of a metallic current collector, and a thickness of the permanent magnet material layer is 0.1 µm to 10 µm.

4. The magnetic current collector according to claim 1, wherein the permanent magnet material comprises at least one of a rare earth permanent magnet material, a metallic permanent magnet material, or a ferrite-based permanent magnet material.

5. The magnetic current collector according to claim 4, wherein the rare earth permanent magnet material comprises at least one of SmCo₅, Sm₂Co₁₇, Nd-Fe-B, Pr-Fe-B, or Sm-Fe-N; the metallic permanent magnet material comprises at least one of Al-Ni-Co, Fe-Cr-Co, Cu-Ni-Fe, or Fe-Co-V; and the ferrite-based permanent magnet material comprises a permanent magnet material formed by sintering Fe₂O₃ with at least one of nickel oxide, zinc oxide, manganese oxide, barium oxide, or strontium oxide.

6. The magnetic current collector according to claim 1, wherein a resistivity of the permanent magnet material is less than or equal to 200Ω·m.

7. The magnetic current collector according to claim 1, wherein the permanent magnet material layer further comprises a conductive material, and a mass percent of the conductive material is less than 50%.

8. The magnetic current collector according to claim 7, wherein the conductive material comprises at least one of acetylene black, superconducting carbon, or Ketjen black.

9. A negative electrode plate, comprising the magnetic current collector according to any one of claims 1 to 8.

10. The negative electrode plate according to claim 9, wherein a negative active material layer exists on a surface of the magnetic current collector, the negative active material layer comprises lithium, and a thickness of the negative active material layer is 5 µm to 200 µm.

11. The negative electrode plate according to claim 10, wherein a conductive layer is disposed between the magnetic current collector and the negative active material layer.

12. The negative electrode plate according to claim 11, wherein the conductive layer comprises at least one of Cu, Ni, Ti, Ag, or a carbon conductive agent.

13. A lithium metal battery, comprising the negative electrode plate according to any one of claims 9 to 12.

14. An electronic device, comprising the lithium metal battery according to claim 13.
